# FASCICULE DE BREVET EUROPEEN

(11) **EP 3 382 484 B1**
(45) Date de publication et mention de la délivrance du brevet: **22.05.2019**
(21) Numéro de dépôt: 18155496.5
(22) Date de dépôt: 07.02.2018
(51) Int. Cl.: G05B 23/02, G01D 7/00, G08G 5/00

(54) **PROCÉDÉ DE DÉTECTION D'UN ÉVÈNEMENT IMPREVU DANS UN AÉRONEF**
ERFASSUNGSVERFAHREN EINES UNVORHERGESEHENEN EREIGNISSES IN EINEM FLUGZEUG
METHOD FOR DETECTING AN UNEXPECTED EVENT IN AN AIRCRAFT

(30) Priorité: 28.03.2017 FR 1770309
(43) Date de publication de la demande: 03.10.2018
(73) Titulaire: Airbus Helicopters, 13725 Marignane Cedex (FR)
(72) Inventeur: FONTAINE, Lionel, 13960 Sausset les Pins (FR); FOURNEAU-PELLETIER, Romain, 13090 Aix en Provence (FR); BILLET-FOISSAC, Emilie, 13880 Velaux (FR)
(74) Mandataire: GPI & Associés

(56) Documents cités:
- EP-A1- 2 699 972
- US-A1- 2016 357 492

## Description

La présente invention concerne un procédé de détection d'un événement imprévu dans un aéronef, ainsi qu'un aéronef muni d'un dispositif appliquant ce procédé.

Un aéronef peut être muni d'un système de détection d'un événement imprévu. L'expression « événement imprévu » désigne une panne, un message, un événement anormal ou opérationnellement significatif éventuellement susceptible d'avoir un impact sur le vol.

Un tel système de détection d'un événement imprévu peut comprendre divers senseurs qui communiquent avec un calculateur d'alerte. A l'aide des signaux transmis par les senseurs, le calculateur d'alerte détermine si l'aéronef est sujet à un ou plusieurs événements imprévus.

Le système de détection d'un événement imprévu est en outre muni d'un dispositif d'affichage en communication avec le calculateur d'alerte. En effet, des règlements de certification imposent de signaler à l'équipage de l'aéronef la présence de pannes. Sur un aéronef comprenant un pilote et au moins un copilote, le pilote et chaque copilote doivent être avertis lorsqu'un événement imprévu survient. Quand une panne a été signalée à l'équipage, cette panne doit rester signalée au pilote tant que la panne est présente.

Dès lors, le calculateur d'alerte sollicite le dispositif d'affichage pour signaler au moins un événement imprévu à un équipage.

Sur certains aéronefs, le dispositif d'affichage comporte un panneau d'alerte dédié exclusivement à cette fonction. Ce panneau d'alerte peut comporter des lampes ou équivalents qui s'allument lorsqu'une panne est détectée.

D'autres aéronefs sont munis de dispositifs multifonction. Pour effectuer diverses tâches opérationnelles, les membres d'équipages peuvent solliciter les dispositifs multifonction pour avoir accès à des informations diverses et/ou pour commander divers équipements. L'utilisation de dispositifs multifonction peut tendre à regrouper plusieurs instruments et commandes, afin de limiter les coûts de l'aéronef, l'encombrement d'une planche de bord, la masse de cette planche de bord...

Un dispositif multifonction comporte usuellement un calculateur central, au moins un écran et des moyens de commande reliés au calculateur central. Par exemple, les moyens de commande comprennent des boutons, et/ou des zones d'un écran dans le cadre d'un écran tactile.

Les tâches opérationnelles réalisables par un dispositif multifonction peuvent inclure le pilotage de l'aéronef, la gestion à court terme de sa trajectoire, la gestion des communications, la mise en sécurité de l'aéronef et l'adaptation des opérations aériennes suite à un événement imprévu.

Une zone fixe d'un écran d'un dispositif multifonction peut alors être dédiée à l'affichage d'événements imprévus. Lorsqu'une panne par exemple se produit, un signal signalant cette panne est transmis au calculateur central d'au moins un dispositif multifonction. Dès lors, le calculateur central commande l'écran du dispositif multifonction pour afficher un message dans la zone fixe de cet écran afin de signaler la panne à un membre d'équipage.

D'autres zones de l'écran sont alors utilisées pour afficher d'autres informations telles que des cartes, des images ou des flux d'images, des informations de radars, des valeurs de paramètres de l'aéronef...

Bien qu'intéressante, la zone fixe réduit de fait les dimensions des autres zones de l'écran. De plus, en l'absence d'événement imprévu la zone fixe n'est pas sollicitée, et occupe un espace qui aurait pu être utile pour remplir d'autres tâches.

Sur certains aéronefs, deux dispositifs multifonction sont disposés respectivement en face d'un pilote et d'un copilote. Ces deux dispositifs multifonction affichent en permanence les événements imprévus survenus.

Sur d'autres aéronefs, le dispositif multifonction disposé en face d'un copilote peut permettre de ne plus afficher un événement imprévu lorsque cet événement imprévu a été identifié par d'autres membres de l'équipage. En variante, un bandeau permanent peut présenter chaque événement imprévu présent à un instant donné au copilote.

Quelle que soit la réalisation, une zone d'un écran réservée à l'affichage d'événements imprévus détectés réduit de fait les dimensions des autres zones de l'écran.

Les dispositifs appliqués sur les aéronefs connus sous les marques H175®, H160®, H225® et tigre® sont aussi connus.

Le document US 9457914 décrit une méthode pour notifier une alerte à un pilote. Cette méthode inclut une étape pour identifier une alerte prioritaire parmi plusieurs alertes. De plus, la méthode comprend une étape pour déterminer l'orientation du champ de vision du pilote et pour afficher l'alerte prioritaire sur un écran présent dans ce champ de vision.

Le document US 5454074 est éloigné de la problématique de l'invention en ayant trait à un système muni de listes de vérification dite « checklist » en langue anglaise.

Le document FR 2998048 décrit un écran tactile haptique.

Les documents US 2016/357492 et EP 2699972 décrivent des écrans pourvus de zones dédiées à des alertes.

La présente invention a alors pour objet de proposer un procédé de détection d'événement imprévu ne monopolisant pas une zone d'un dispositif multifonction.

L'invention vise notamment un procédé de détection d'un événement imprévu au sein d'un aéronef, cet aéronef comprenant un équipage, cet équipage comprenant un pilote, cet aéronef étant muni d'un calculateur d'alerte apte à détecter la présence d'un dit événement imprévu, cet aéronef étant muni d'un dispositif multifonction principal agencé en face du pilote et d'au moins deux dispositifs multifonction secondaires visibles par le pilote, le dispositif multifonction principal et lesdits dispositifs multifonction secondaires comprenant chacun au moins un écran et un calculateur de commande, chaque écran affichant un objet,

Ce procédé comporte les étapes suivantes :
- détection de la survenue d'un événement imprévu avec ledit calculateur d'alerte, et transmission d'un signal d'alerte signalant ledit événement imprévu vers ledit dispositif multifonction principal et lesdits dispositifs multifonction secondaires,
- suite à la survenue d'un dit événement imprévu, placement d'au moins une zone d'alerte sur au moins un desdits dispositif multifonction principal et dispositifs multifonction secondaires tant que cet événement imprévu perdure en réalisant les étapes suivantes, chaque zone d'alerte pouvant être placée selon un premier mode d'affichage ou un deuxième mode d'affichage dans lesquels la zone d'alerte comporte au moins un message visible par le pilote signalant ledit événement imprévu ou selon un mode masqué dans lequel ledit au moins un message n'est pas visible :
   ∘ placement éventuellement dans une position prédéterminée et selon le premier mode d'affichage d'une zone d'alerte sur ledit objet affiché sur ledit au moins un écran dudit dispositif multifonction principal, le calculateur de commande du dispositif multifonction principal transmettant par exemple un signal à un écran correspondant pour requérir ce placement,
   ∘ sollicitation d'une commande d'acquittement par ledit équipage, et placement de ladite zone d'alerte présente sur le dispositif multifonction principal selon ledit deuxième mode d'affichage suite à ladite sollicitation d'une commande d'acquittement, le calculateur de commande du dispositif multifonction principal recevant par exemple un signal provenant de la commande d'acquittement et envoyant un signal à un écran correspondant pour requérir ce placement,
   ∘ sollicitation d'une commande de réduction de ladite zone d'alerte présente dans le dispositif multifonction principal par ledit équipage et suite à ladite sollicitation d'une commande de réduction :
      ▪ placement de ladite zone d'alerte présente dans le dispositif multifonction principal selon le mode masqué, le calculateur de commande du dispositif multifonction principal recevant par exemple un signal provenant de la commande de réduction et envoyant un signal à un écran correspondant pour requérir ce placement,
      ▪ détermination de la présence d'une dite zone d'alerte selon le deuxième mode d'affichage sur au moins un desdits dispositifs multifonction secondaires, les calculateurs de commande des dispositifs multifonction secondaires évaluant par exemple la présence d'une telle zone d'alerte en consultant des états de fonctionnement émis par chaque dispositif multifonction, et
      ▪ si ladite présence n'est pas déterminée, placement d'une dite zone d'alerte sur ledit objet affiché sur ledit au moins un écran d'un desdits dispositifs multifonction secondaires selon ledit deuxième mode d'affichage, le calculateur de commande d'un dispositif multifonction secondaire prédéterminé transmettant par exemple un signal à un écran correspondant pour requérir ce placement si ce calculateur de commande constate qu'une zone d'alerte n'est pas affichée dans le deuxième mode d'affichage sur un des dispositifs multifonction.

L'expression « événement imprévu » désigne au moins une panne, voire un événement anormal ou opérationnellement significatif, éventuellement susceptible d'avoir un impact sur le vol.

L'expression « premier mode d'affichage » désigne un état conféré à une zone d'alerte, cet état conditionnant un aspect visuel de la zone d'alerte et le contenu de la zone d'alerte. Il en va de même pour les expressions « deuxième mode d'affichage » et « mode masqué ».

Ainsi, une zone d'alerte placée automatiquement selon le premier mode d'affichage contient au moins un message désignant un événement imprévu et présente un premier aspect visuel. Cette zone d'alerte placée selon le deuxième mode d'affichage contient au moins ce message désignant un événement imprévu mais présente un deuxième aspect visuel différent du premier aspect visuel. Enfin, cette zone d'alerte placée selon le mode masqué ne contient plus ledit message et présente un troisième aspect visuel.

L'expression « dispositif multifonction » non associée aux termes « principal » ou « secondaire » ou annexe fait référence à tous les dispositifs multifonction.

Le terme « objet » désigne ce qui est affiché sur un écran, tel qu'au moins une image, des données, au moins une vidéo, au moins une représentation digitale d'un instrument...

Dès lors, l'aéronef comporte au moins trois dispositifs multifonction visibles par le pilote, et formant un L par exemple. Le dispositif multifonction principal est par exemple situé en face du pilote, à savoir face à son torse. Les deux dispositifs multifonction secondaires peuvent être situés du coté gauche ou du coté droit du pilote, par exemple sur une console centrale ou un pupitre central

Dès lors, un calculateur d'alerte usuel de l'aéronef sollicite divers senseurs pour déterminer si un événement imprévu s'est produit, par exemple une panne.

Ce calculateur d'alerte transmet en outre un signal à chaque dispositif multifonction directement, ou indirectement via au moins une autre calculateur. Chaque dispositif multifonction peut alors être informé qu'un événement imprévu s'est produit.

Dans l'affirmative et hors cas de panne du dispositif multifonction principal, le calculateur de commande de ce dispositif multifonction principal contrôle automatiquement un écran de ce dispositif multifonction principal pour placer une zone d'alerte sur cet écran selon le premier mode d'affichage. La zone d'alerte est superposée à l'objet initialement affiché.

Le procédé prévoit en outre une étape d'acquittement en sollicitant manuellement une commande d'acquittement, par exemple attachée à la zone d'alerte correspondante. Un membre de l'équipage manoeuvre la commande d'acquittement pour garantir que l'équipage a pris note de la présence de l'événement imprévu, ce qui induit le placement automatique de la zone d'alerte selon le deuxième mode d'affichage sur requête du calculateur de commande associé.

A partir de ce stade, le pilote peut manoeuvrer une commande de réduction, par exemple attachée à la zone d'alerte correspondante, pour masquer les messages de la zone d'alerte dans le dispositif multifonction principal en la plaçant dans le mode masqué. Ce masquage est accompagné obligatoirement du placement d'une zone d'alerte dans le deuxième mode d'affichage sur un dispositif multifonction secondaire.

Dès lors, ce procédé permet de garantir techniquement qu'un pilote a en permanence dans son champ de vision une zone d'alerte signalant une panne détectée, indépendamment des actions qu'il entreprend. Ce procédé interdit la fermeture accidentelle d'une zone d'alerte puisque le masquage d'une zone d'alerte sur un dispositif multifonction induit obligatoirement le placement d'une zone d'alerte non masquée sur un autre dispositif multifonction.

En outre, ce procédé ne monopolise pas une zone d'un écran contrairement à des procédés connus.

Le procédé peut de plus comporter une ou plusieurs des caractéristiques qui suivent.

Ainsi, le procédé peut comporter une étape de transmission d'un état de fonctionnement de chacun desdits dispositifs multifonction secondaires et dispositif multifonction principal les uns aux autres, l'état de fonctionnement d'un desdits dispositifs multifonction secondaires ou dispositif multifonction principal indiquant au moins si une zone d'alerte est affichée par ce dispositif multifonction secondaire ou dispositif multifonction principal selon le deuxième mode d'affichage, chacun desdits dispositifs multifonction secondaires et dispositif multifonction principal déterminant s'il doit placer une zone d'alerte sur un dit écran en fonction desdits états de fonctionnement et dudit signal d'alerte.

Les calculateurs de commande des dispositifs multifonction communiquent entre eux pour appliquer chacun le procédé et contrôler le ou les écrans correspondants afin de présenter si nécessaire une zone d'alerte selon le mode adéquat.

Selon un aspect, une dite zone d'alerte placée dans le premier mode d'affichage peut présenter un cadre clignotant entourant ledit au moins un message, ledit cadre clignotant n'apparaissant pas dans le deuxième mode d'affichage.

Dès lors, le cadre clignotant attire l'attention du pilote lors de la survenue d'un événement imprévu.

Selon un aspect, une dite zone d'alerte placée dans le mode masqué peut présenter uniquement un repère qui signale cette zone d'alerte.

Par exemple, le repère peut avoir la forme d'un rectangle ou d'un carré. Le repère peut avoir des dimensions très restreintes au regard des dimensions de la zone d'alerte dans le premier mode d'affichage ou le deuxième mode d'affichage.

Selon un aspect, la commande d'acquittement peut comporter une portion tactile dudit au moins un écran du dispositif multifonction principal, ladite portion tactile étant délimitée par ladite zone d'alerte placée selon ledit premier mode d'affichage sur ledit dispositif multifonction principal.

Par conséquent, un membre de l'équipage peut appuyer sur la portion de l'écran sur laquelle apparait la zone d'alerte pour acquitter l'événement imprévu.

Selon un aspect, la commande de réduction d'une zone d'alerte comporte un symbole attaché à la zone d'alerte placée selon ledit deuxième mode d'affichage.

Le terme « attaché » signifie que le symbole est un élément affiché lors de l'apparition de la zone d'alerte, voire au sein de la zone d'alerte.

Par exemple, le symbole peut la prendre la forme d'une croix, d'un tiret ou de tout autre type d'icône, ce symbole apparaissant sur la zone d'alerte concernée selon le deuxième mode d'affichage.

Selon un aspect, lorsqu'une dite zone d'alerte est affichée sur ledit au moins un écran d'un dispositif multifonction secondaire selon le deuxième mode d'affichage, le procédé peut comporter les étapes de :
- sollicitation d'une commande de réduction, de ladite zone d'alerte affichée sur ledit au moins un écran d'un dispositif multifonction secondaire, et suite à ladite sollicitation d'une commande de réduction :
   ∘ placement selon le mode masqué de cette zone d'alerte présente dans un dispositif multifonction secondaire selon le deuxième mode d'affichage, et
   ∘ placement d'une zone d'alerte sur ledit objet affiché sur ledit au moins un écran d'un autre dispositif multifonction secondaire selon ledit deuxième mode d'affichage.

Par exemple, le procédé peut prévoir une permutation circulaire entre les dispositifs multifonction secondaires pour que la réduction d'une zone d'alerte dans le mode masqué induise l'apparition d'une zone d'alerte selon le deuxième mode d'affichage sur un autre dispositif multifonction secondaire prédéterminé.

Par exemple, les calculateurs de commande des dispositifs multifonction secondaires déterminent chacun s'ils doivent placer une zone d'alerte dans le deuxième mode d'affichage en fonction des états de fonctionnement de chaque autre dispositif multifonction secondaire.

Selon un aspect, à chaque instant et au moins dans le deuxième mode d'affichage, une dite zone d'alerte peut comporter une liste incluant chaque événement imprévu détecté et encore en vigueur.

Par exemple, tous les événements imprévus en vigueur sont visibles dans la zone d'alerte selon le deuxième mode d'affichage mais aussi selon le premier mode d'affichage.

Selon un aspect, en présence de plusieurs événements imprévus, une dite zone d'alerte peut comporter selon le premier mode d'affichage uniquement un message relatif au dernier événement imprévu survenu.

Selon un exemple, dans le premier mode d'affichage, seul le dernier événement imprévu est marqué dans la zone d'alerte. Par contre, tous les événements imprévus en vigueur sont visibles dans la zone d'alerte selon le deuxième mode d'affichage.

Selon un aspect, suite à ladite survenue d'un événement imprévu, le procédé peut comporter les étapes suivantes :
- détection d'une panne dudit dispositif multifonction principal empêchant ledit placement d'une zone d'alerte selon le premier mode d'affichage sur ledit objet affiché sur ledit au moins un écran dudit dispositif multifonction principal,
- placement d'une zone d'alerte selon le premier mode d'affichage sur ledit objet affiché sur ledit au moins un écran d'un dit dispositif multifonction secondaire prédéterminé.

Par exemple, le calculateur de commande d'un dispositif multifonction secondaire peut détecter au travers de l'état de fonctionnement du dispositif multifonction principal qu'aucune zone d'alerte n'a été affichée. Dès lors, ce calculateur de commande d'un dispositif multifonction secondaire peut afficher cette zone d'alerte selon le premier mode d'affichage.

Selon un aspect, une taille de la zone d'alerte varie en fonction du nombre d'événement(s) imprévu(s) en vigueur.

Par exemple, les dimensions de la zone d'alerte augmentent à l'arrivée de chaque nouvel événement imprévu.

Eventuellement, cette taille peut être bornée. Par exemple, à partir de sept événements imprévus la taille de la zone d'alerte n'augmente plus, une liste déroulante est utilisée.

Selon un aspect, lorsqu'une dite zone d'alerte est placée selon le deuxième mode d'affichage sur un desdits dispositifs multifonction secondaires pour signaler un événement imprévu, lorsqu'un nouvel événement imprévu est détecté, ladite zone alerte peut être placée dans le premier mode d'affichage.

Selon un aspect, suite à la survenue d'un événement imprévu chacun desdits dispositif multifonction principal et dispositifs multifonction secondaires étant dans une configuration donnée dans laquelle une zone d'alerte est présentée dans un des premier mode d'affichage/ deuxième mode d'affichage/ mode masqué ou n'est pas présentée, suite à la survenue d'un nouvel événement imprévu et de ladite sollicitation d'une commande d'acquittement lesdits dispositif multifonction principal et dispositifs multifonction secondaires peuvent être placés dans ladite configuration donnée.

Selon un aspect, les membres d'équipage comprenant un copilote, un dispositif multifonction annexe pouvant être agencé en face dudit copilote, le dispositif multifonction annexe comprenant au moins un écran et un calculateur de commande, suite à la survenue d'un événement imprévu le procédé peut comporter une étape de placement dans une position prédéterminée et selon le premier mode d'affichage d'une zone d'alerte sur ledit au moins un écran dudit dispositif multifonction annexe.

Selon un aspect, suite à la survenue d'un événement imprévu et en cas d'absence d'une zone d'alerte sur un desdits dispositifs multifonction secondaires, une zone d'alerte peut être placée sur ce dispositif multifonction secondaire selon le mode masqué.

Une zone d'alerte peut alors être placée sur chaque dispositif multifonction secondaire suite à l'arrivée d'un événement imprévu.

Selon un aspect, chaque zone d'alerte d'un dit dispositif multifonction principal et dispositifs multifonction secondaires peut comporter dans ledit mode masqué une zone tactile d'agrandissement, le calculateur de commande d'un dit dispositif multifonction principal et dispositifs multifonction secondaires plaçant ladite zone d'alerte dans le deuxième mode d'affichage suite à une sollicitation de ladite zone tactile d'agrandissement correspondante.

Par exemple, une zone d'alerte prend la forme d'une icône dans le mode masqué. Cette icône peut couvrir une zone tactile d'agrandissement. En appuyant sur l'icône, un membre de l'équipage indique au calculateur de commande correspondant de placer la zone d'alerte dans le deuxième mode d'affichage.

Outre un procédé, l'invention vise un aéronef embarquant un équipage, ledit équipage comprenant au moins un pilote, ledit aéronef étant muni d'un calculateur d'alerte apte à détecter la présence d'un dit événement imprévu, ledit aéronef étant muni d'un dispositif multifonction principal agencé en face du pilote et d'au moins deux dispositifs multifonction secondaires visibles par le pilote, le dispositif multifonction principal et lesdits dispositifs multifonction secondaires comprenant chacun au moins un écran et un calculateur de commande, chaque écran affichant un objet,

Ledit dispositif multifonction principal et lesdits dispositifs multifonction secondaires communiquent alors directement ou indirectement avec ledit calculateur d'alerte et sont configurés pour appliquer le procédé décrit précédemment.

L'invention et ses avantages apparaîtront avec plus de détails dans le cadre de la description qui suit avec des exemples donnés à titre illustratif en référence aux figures annexées qui représentent :
- la figure 1, une vue d'un aéronef selon l'invention, et
- les figures 2 à 13, des schémas illustrant l'invention.

Les éléments présents dans plusieurs figures distinctes sont affectés d'une seule et même référence.

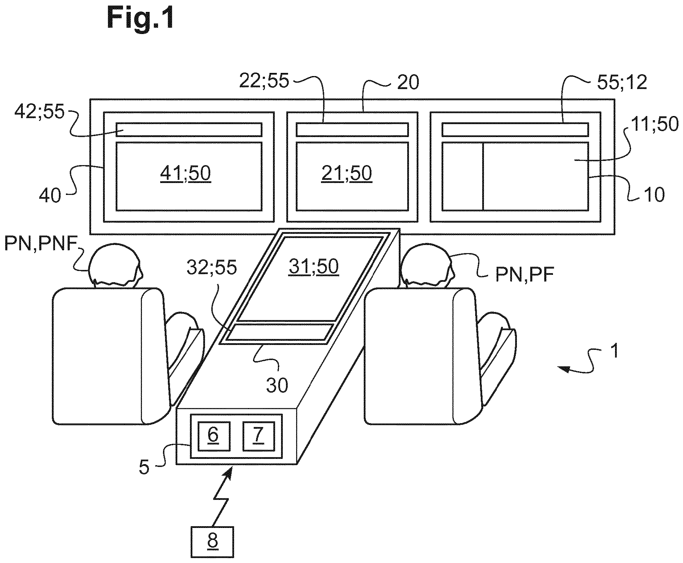

La figure 1 présente un aéronef 1 selon l'invention.

Cet aéronef 1 est piloté par un équipage PN comprenant un pilote PF, et éventuellement un copilote PNF.

Cet aéronef comporte un système de détection d'événement imprévu pour informer l'équipage de la présence d'une panne par exemple. Ce système de détection d'événement imprévu comporte un calculateur d'alerte 5 relié à des senseurs 8.

Le calculateur d'alerte 5 peut être un calculateur usuel connu de l'homme du métier. Le calculateur d'alerte peut comprendre par exemple au moins un processeur 6 et au moins un système de stockage 7, au moins un circuit intégré, au moins un système programmable, au moins un circuit logique, ces exemples ne limitant pas la portée donnée à l'expression « calculateur d'alerte ».

De même, les senseurs 8 peuvent être des senseurs usuels tels que des senseurs de vitesse, de température, de pression...

Le calculateur d'alerte peut appliquer des procédés connus de l'homme du métier pour évaluer la présence d'un ou plusieurs événements imprévus, et notamment des pannes.

En outre, le système de détection d'événement imprévu comporte une pluralité de dispositifs multifonction 10, 20, 30, 40 communiquant chacun avec le calculateur d'alerte 5. Chaque dispositif multifonction 10, 20, 30, 40 est à même de remplir plusieurs fonctions, et est parfois connu sous l'acronyme MFD correspondant à l'expression « Multi Functions Display » en langue anglaise.

Chaque dispositif multifonction 10, 20, 30, 40 comporte un calculateur de commande 55, et au moins un écran 50. Le calculateur de commande 55 peut être un calculateur usuel connu de l'homme du métier. Chaque calculateur de commande peut comprendre par exemple au moins un processeur et au moins un système de stockage, au moins un circuit intégré, au moins un système programmable, au moins un circuit logique, ces exemples ne limitant pas la portée donnée à l'expression « calculateur de commande ».

Dès lors, le calculateur de commande d'un dispositif multifonction particulier commande chaque écran de ce dispositif multifonction particulier pour afficher les objets requis sur cet écran. De plus, le calculateur de commande d'un dispositif multifonction particulier reçoit des signaux signalant à ce dispositif multifonction particulier un ou plusieurs événement(s) imprévu(s) détecté(s) par le calculateur d'alerte.

De plus, le calculateur de commande de chaque dispositif multifonction communique par des liaisons filaires ou non filaires avec chacun des autres calculateurs de commande des autres dispositifs multifonction. En effet, chaque calculateur de commande peut transmettre aux autres calculateurs de commande un état de fonctionnement.

Dans ce contexte, l'aéronef comporte un dispositif multifonction dit « dispositif multifonction principal 10 ». Le dispositif multifonction principal 10 est agencé en face du pilote PF. Le dispositif multifonction principal 10 comporte ainsi au moins un écran 11 et un calculateur de commande 12 pouvant être respectivement qualifiés d'écran principal et de calculateur de commande principal.

De plus, l'aéronef comporte au moins deux dispositifs multifonction dit « dispositifs multifonction secondaires 20, 30 ». Les dispositifs multifonction secondaires 20, 30 sont visibles par le pilote, en étant par exemple agencés sur le côté du pilote PF, le cas échéant entre le pilote PF et le copilote PNF.

Un premier dispositif multifonction secondaire 20 comporte ainsi au moins un écran 21 et un calculateur de commande 22 pouvant être respectivement qualifiée de premier écran secondaire 21 et de premier calculateur de commande secondaire 22. Un deuxième dispositif multifonction secondaire 30 comporte ainsi au moins un écran 31 et un calculateur de commande 32 pouvant être respectivement qualifiés de deuxième écran secondaire 31 et de deuxième calculateur de commande secondaire 32.

Enfin, l'aéronef peut comporter un dispositif multifonction dit « dispositif multifonction annexe 40 ». Le dispositif multifonction annexe 40 est agencé en face du copilote PNF. Le dispositif multifonction annexe 40 comporte ainsi au moins un écran 41 et un calculateur de commande 42 pouvant être respectivement qualifiés d'écran annexe 41 et de calculateur de commande annexe 42.

Par exemple, l'aéronef comporte alors quatre dispositifs multifonction formant un T.

Ce système de détection d'événement imprévu est configuré pour appliquer le procédé selon l'invention.

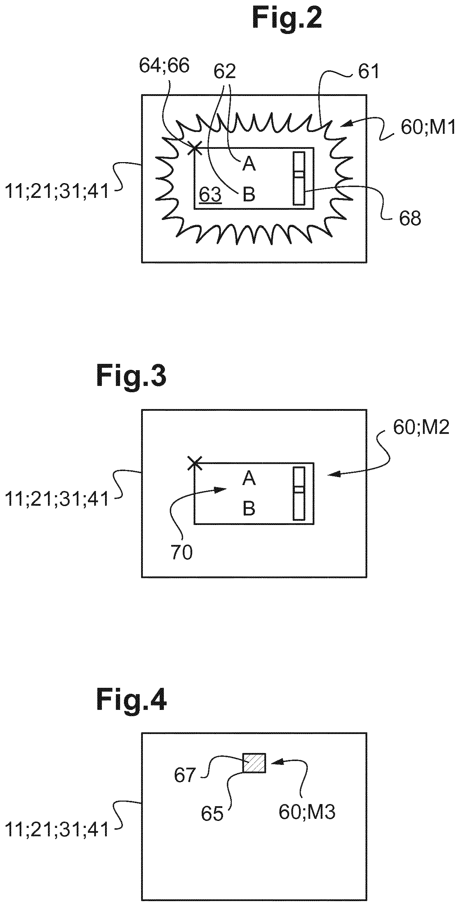

Selon l'invention et en référence aux figures 2 à 4, chaque dispositif multifonction peut afficher une zone d'alerte 60 lorsque le calculateur d'alerte émet un signal mentionnant la survenue d'un événement imprévu. Cette zone d'alerte 60 est alors affichée sur un dispositif multifonction sur ordre du calculateur de commande de ce dispositif multifonction en fonction d'instructions mémorisées et des états de fonctionnement transmis par les autres calculateurs de commande.

Selon le premier mode d'affichage M1 de la figure 2, une zone d'alerte 60 comporte une zone de texte dans laquelle au moins un message 62 est affiché. Chaque message signale un unique événement imprévu. Selon l'exemple représenté, deux messages A, B sont affichés. Selon un autre exemple, dans le premier mode d'affichage M1 seul le dernier message est affiché.

La zone de texte peut avoir des dimensions qui varient en fonction du nombre de messages. En outre, à partir d'un nombre prédéterminé de messages, la zone d'alerte peut présenter une liste déroulante 68.

Par ailleurs, la zone d'alerte peut matérialiser une commande dite « commande d'acquittement 63 » pouvant être manoeuvrée par une pilote. Par exemple, la surface couverte par la zone d'alerte est une portion tactile d'un écran. Lorsqu'un membre de l'équipage appuie sur la zone d'alerte, le calculateur de commande du dispositif multifonction concerné reçoit un signal lui indiquant que la commande d'acquittement a été sollicitée.

De plus, la zone d'alerte peut matérialiser une commande dite « commande de réduction 64 » pouvant être manoeuvrée par une pilote. Par exemple, la zone d'alerte comporte un symbole 66, tel qu'une croix selon la figure 2, disposé sur une portion tactile d'un écran. Lorsqu'un membre de l'équipage appuie sur le symbole 66, le calculateur de commande du dispositif multifonction concerné reçoit un signal lui indiquant que la commande de réduction est sollicitée. La commande de réduction 64 peut être inactive selon le premier mode d'affichage

En outre, selon le premier mode d'affichage M1 un cadre clignotant 61 peut entourer la zone de texte pour attirer l'attention d'un membre de l'équipage.

Par contre et en référence à la figure 3, le cadre clignotant n'apparait pas dans le deuxième mode d'affichage M2.

Selon le deuxième mode d'affichage M2, la zone d'alerte peut aussi comporter la commande de réduction 64, cette commande de réduction 64 étant active.

A l'inverse, la commande d'acquittement 63 peut être inactive.

De plus, selon le deuxième mode d'affichage M2, tous les événements imprévus en vigueur sont obligatoirement signalés par un message dans la zone de texte de la zone d'alerte, le cas échéant par une liste 70.

La figure 4 illustre un mode masqué M3. Selon ce mode masqué M3, aucun message signalant un événement imprévu est visible. La zone d'alerte est alors dépourvue de zone de texte par exemple.

Selon l'exemple représenté, la zone d'alerte peut présenter un simple repère 65, tel qu'un carré, un rond, un rectangle... ce repère 65 peut couvrir une zone tactile représentant alors une commande d'agrandissement sous la forme d'une zone tactile d'agrandissement 67.

Selon un autre aspect, chaque calculateur de commande peut émettre vers les autres calculateurs de commande son état de fonctionnement. Cet état de fonctionnement contient une information indiquant par exemple si le calculateur de commande a requis le placement d'une zone d'alerte selon un des premier mode d'affichage M1, deuxième mode d'affichage M2 et mode masqué M3.

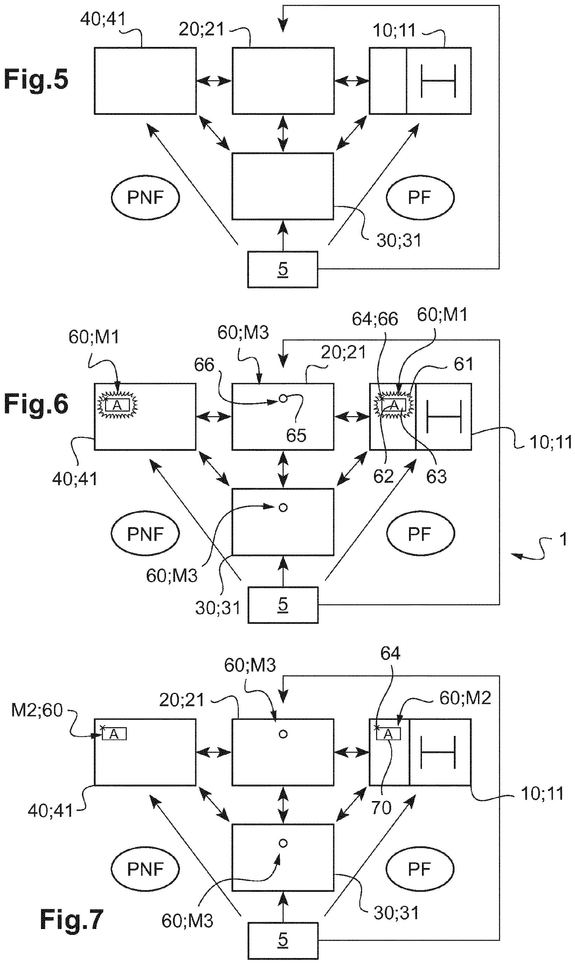

Les figures 5 à 13 illustrent alors le procédé appliqué par ce système.

En référence à la figure 5, en l'absence d'événement imprévu, le calculateur d'alerte indique à chaque dispositif multifonction qu'aucun événement imprévu n'est survenu. Aucune zone d'alerte n'est affichée.

En référence à la figure 6, lorsque le calculateur d'alerte 5 détecte la survenue d'un événement imprévu, un signal d'alerte signalant l'événement est émis, directement ou indirectement par le calculateur d'alerte, vers le dispositif multifonction principal 10, les dispositifs multifonction secondaires 20, 30 et le cas échéant le dispositif multifonction annexe 40.

Dès lors, le calculateur de commande principal du dispositif multifonction principal 10 contrôle automatiquement un écran 11 de ce dispositif multifonction principal 10 pour placer une zone d'alerte 60 sur cet écran selon le premier mode d'affichage M1. Cette zone d'alerte contient un message décrivant l'événement imprévu.

Le cas échéant, le calculateur de commande annexe du dispositif multifonction annexe 40 en fait de même.

En cas de panne du dispositif multifonction principal 10, chaque dispositif multifonction secondaire reçoit un état de fonctionnement provenant de ce dispositif multifonction principal 10 indiquant que la zone d'alerte requise n'a pas été affichée, voire ne reçoit aucun état de fonctionnement. Dès lors, le premier dispositif multifonction secondaire 20 affiche la zone d'alerte selon le premier mode d'affichage M1 en lieu et place du dispositif multifonction principal 10.

Eventuellement, chaque dispositif multifonction secondaire, n'affichant pas la zone d'alerte selon le premier mode d'affichage, affiche sur ordre de son calculateur de commande la zone d'alerte selon le mode masqué. En fonctionnement normal, une zone d'alerte est affichée selon le premier mode d'affichage M1 sur le dispositif multifonction principal 10 et le dispositif multifonction annexe 40, chaque dispositif multifonction secondaire 20, 30 pouvant afficher une zone d'alerte selon le mode masqué M3.

Le pilote PF et le cas échéant le copilote PNF sont alors alertés par le système.

Les zones d'alerte placées selon le premier mode d'affichage M1 restent dans cet état tant qu'un membre de l'équipage ne sollicite pas une commande d'acquittement.

En référence à la figure 7, si le pilote sollicite la commande d'acquittement du dispositif multifonction principal 10 ou si le copilote sollicite la commande d'acquittement du dispositif multifonction annexe 40, toutes les zones d'alertes placées selon le premier mode d'affichage M1 sont placées automatiquement dans le deuxième mode d'affichage M2 par les calculateurs de commande correspondants.

A titre illustratif, le pilote appuie sur la zone d'alerte placée selon le premier mode d'affichage sur le dispositif multifonction principal 10.

Dès lors, le calculateur de commande principal du dispositif multifonction principal 10 reçoit un signal et commande l'écran principal 11 du dispositif multifonction principal 10 pour placer la zone d'alerte dans le deuxième mode d'affichage M2.

De plus, le calculateur de commande principal du dispositif multifonction principal 10 en informe les autres calculateurs de commande au travers de l'état de fonctionnement transmis.

Par suite, le calculateur de commande annexe du dispositif multifonction annexe 40 reçoit cet état de fonctionnement et commande l'écran annexe 41 du dispositif multifonction annexe 40 pour placer la zone d'alerte correspondante dans le deuxième mode d'affichage M2.

A partir de cet instant et jusqu'à l'arrivée d'un autre événement imprévu, une reconfiguration des dispositifs multifonction est possible.

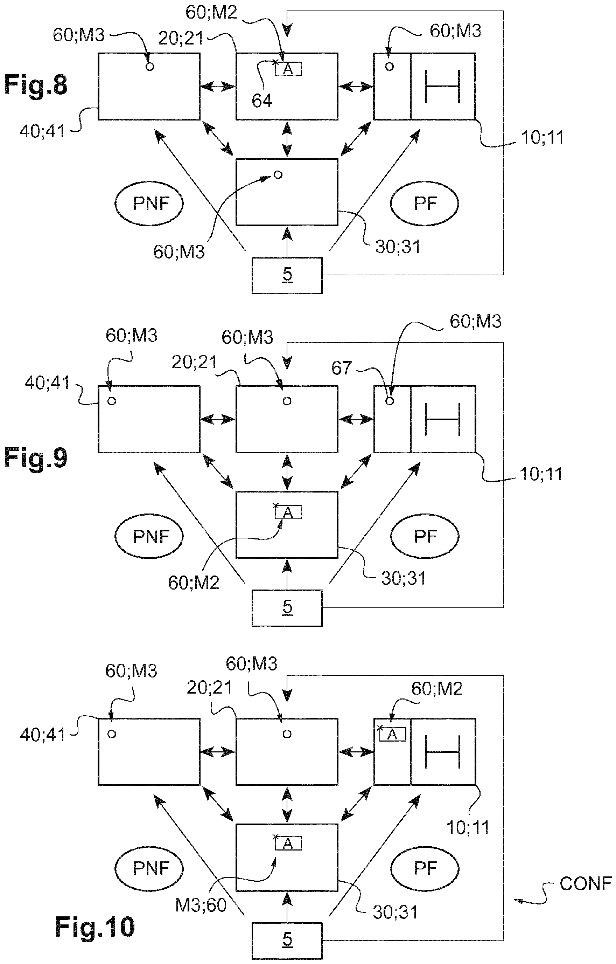

Par exemple et en référence à la figure 8, le copilote PNF peut appuyer sur la commande de réduction de la zone d'alerte du dispositif multifonction annexe 40 pour la placer selon le mode masqué M3. Cette opération est réversible en sollicitant la zone tactile d'agrandissement associée.

Par ailleurs, le pilote peut masquer la zone d'alerte sur le dispositif multifonction principal en la plaçant dans le mode masqué. Toutefois, ce masquage est réalisé en plaçant obligatoirement une zone d'alerte selon le deuxième mode d'affichage sur au moins un dispositif multifonction secondaire 20, 30. Par conséquent, le pilote a toujours dans son champ de vision une zone d'alerte placée selon le deuxième mode d'affichage.

Ainsi et en référence à la figure 7, le pilote PF peut solliciter la commande de réduction 64 de la zone d'alerte placée selon le deuxième mode d'affichage M2 sur le dispositif multifonction principal 10.

Le calculateur de commande principal reçoit alors un signal signalant cette sollicitation. Dès lors et en référence à la figure 8, le calculateur de commande principal place la zone d'alerte présente dans le dispositif multifonction principal 10 selon le mode masqué M3.

De plus, le calculateur de commande principal du dispositif multifonction principal 10 en informe les autres calculateurs de commande au travers de l'état de fonctionnement transmis.

Par suite, les calculateurs de commande secondaires des dispositifs multifonction secondaires déterminent si une zone d'alerte est placée selon le deuxième mode d'affichage M2 sur au moins un desdits dispositifs multifonction secondaires 20, 30.

Dans la négative et en référence à la figure 8, le premier calculateur de commande secondaire pilote un premier écran secondaire 21 du premier dispositif multifonction secondaire 20 pour placer sur ce premier écran secondaire une zone d'alerte selon le deuxième mode d'affichage M2.

Si cet emplacement ne convient pas au pilote PF, le pilote PF voire le copilote peut solliciter la commande de réduction 64 de la zone d'alerte placée selon le deuxième mode d'affichage M2 sur le premier dispositif multifonction secondaire 20.

Dès lors et en référence à la figure 9, le premier calculateur de commande secondaire reçoit alors un signal signalant cette sollicitation. Le premier calculateur de commande secondaire place la zone d'alerte présente dans le premier dispositif multifonction secondaire 20 selon le mode masqué M3.

De plus, le premier calculateur de commande secondaire du premier dispositif multifonction secondaire 20 en informe les autres calculateurs de commande au travers de l'état de fonctionnement transmis.

Par suite, le deuxième calculateur de commande secondaire du deuxième dispositif multifonction secondaire 30 détermine si une zone d'alerte est placée selon le deuxième mode d'affichage M2 sur au moins un des écrans du deuxième dispositif multifonction secondaire 30.

Dans la négative, le deuxième calculateur de commande secondaire pilote un écran du deuxième dispositif multifonction secondaire 30 pour placer sur cet écran une zone d'alerte selon le deuxième mode d'affichage M2.

Une permutation circulaire peut être effectuée entre les dispositifs multifonction secondaires pour maintenir obligatoirement une zone d'alerte selon le deuxième mode d'affichage.

De plus, à chaque instant, le pilote peut requérir le placement de la zone d'alerte présente sur le dispositif multifonction principal dans le deuxième mode d'affichage en sollicitant le cas échéant la zone tactile d'agrandissement correspondante.

En référence à la figure 10, le calculateur de commande principal reçoit alors un signal signalant cette sollicitation. Dès lors, le calculateur de commande principal place la zone d'alerte présente dans le dispositif multifonction principal selon le deuxième mode d'affichage M2, sans influence sur les autres dispositifs multifonction.

Selon un autre aspect, le système se trouve à chaque instant dans une configuration CONF. Chaque configuration CONF indique si un dispositif multifonction présente une zone d'alerte et dans quel mode.

Selon l'exemple de la figure 10, le dispositif multifonction principal 10 présente une zone d'alerte dans le deuxième mode d'affichage M2, le dispositif multifonction annexe 40 présente une zone d'alerte dans le mode masqué M3, le deuxième dispositif multifonction secondaire 30 présente une zone d'alerte dans le deuxième mode d'affichage M2, et le premier dispositif multifonction secondaire 20 présente une zone d'alerte dans le mode masqué M3.

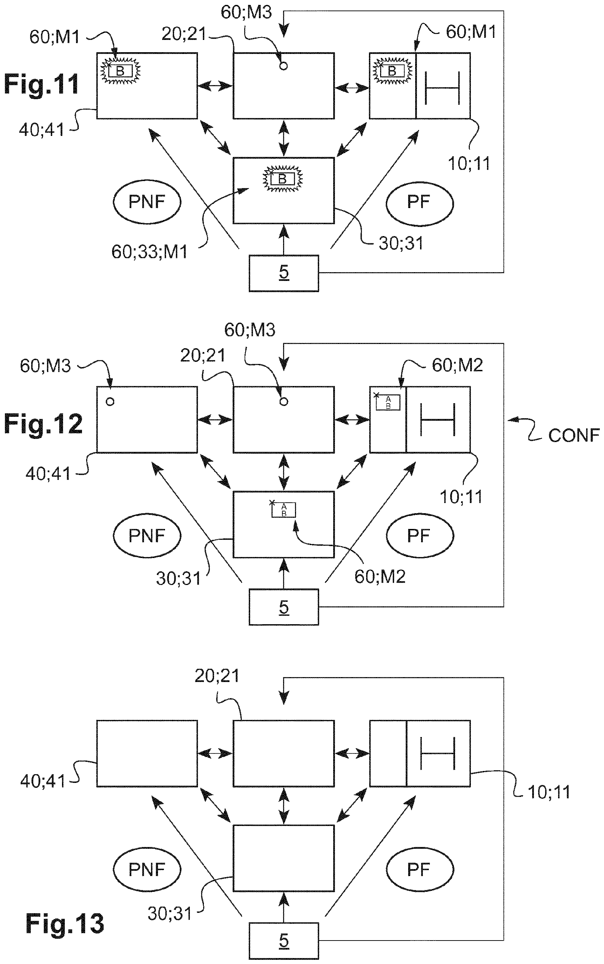

Si un nouvel événement imprévu est signalé par le calculateur d'alerte 5 et en référence à la figure 11, le calculateur de commande principal 12 du dispositif multifonction principal 10 contrôle un écran de ce dispositif multifonction principal 10 pour placer une zone d'alerte 60 sur cet écran selon le premier mode d'affichage M1. Cette zone d'alerte contient un message décrivant le nouvel événement imprévu, et optionnellement des messages pour chaque événement imprévu en vigueur.

Le cas échéant, le calculateur de commande annexe 42 du dispositif multifonction annexe 40 en fait de même.

De plus, chaque zone d'alerte placée avant la survenue du nouvel événement imprévu selon le deuxième mode d'affichage M2 est placée selon le premier mode d'affichage M1.

Dès lors et selon l'exemple représenté, le deuxième calculateur de commande secondaire place la zone d'alerte présente sur le deuxième dispositif multifonction secondaire 30 dans le premier mode d'affichage M1.

Suite à la survenue du nouvel événement imprévu, le pilote ou le copilote acquitte ce nouvel événement imprévu en manoeuvrant une commande d'acquittement selon la méthode décrite précédemment.

Eventuellement et en référence à la figure 12, les dispositifs multifonction passent dans la configuration CONF atteinte avant la survenue du nouvel événement sur ordre des calculateurs de commande correspondant, à savoir dans la configuration visible sur la figue 10.

Enfin et en référence à la figure 13, si les événements imprévus disparaissent, toutes les zones d'alerte affichées disparaissent automatiquement sur ordre des calculateurs de commande correspondant.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de détection d'un événement imprévu au sein d'un aéronef (1), ledit aéronef (1) comprenant un équipage (PN), ledit équipage comprenant un pilote (PF), ledit aéronef (1) étant muni d'un calculateur d'alerte (5) apte à détecter la présence d'un dit événement imprévu, ledit aéronef (1) étant muni d'un dispositif multifonction principal (10) agencé en face du pilote (PF) et d'au moins deux dispositifs multifonction secondaires (20, 30) visibles par le pilote (PF), le dispositif multifonction principal (10) et lesdits dispositifs multifonction secondaires (20, 30) comprenant chacun au moins un écran (11, 21, 31) et un calculateur de commande (12, 22, 32), chaque écran (11, 21, 31) affichant un objet,
**caractérisé en ce que** ledit procédé comporte les étapes suivantes :
- détection de la survenue d'un événement imprévu avec ledit calculateur d'alerte (5), et transmission d'un signal d'alerte signalant ledit événement imprévu vers ledit dispositif multifonction principal (10) et lesdits dispositifs multifonction secondaires (20, 30),
- suite à ladite survenue d'un dit événement imprévu, placement d'au moins une zone d'alerte (60) sur au moins un desdits dispositif multifonction principal (10) et dispositifs multifonction secondaires (20, 30) tant que cet événement imprévu perdure en réalisant les étapes suivantes, chaque zone d'alerte (60) pouvant être placée selon un premier mode d'affichage (M1) ou un deuxième mode d'affichage (M2) dans lesquels la zone d'alerte (60) comporte au moins un message (62) visible par le pilote (PF) signalant ledit événement imprévu ou selon un mode masqué (M3) dans lequel ledit au moins un message (62) n'est pas visible :
∘ placement selon le premier mode d'affichage (M1) d'une zone d'alerte sur ledit objet affiché sur ledit au moins un écran (11) dudit dispositif multifonction principal (10),
∘ sollicitation d'une commande d'acquittement (63) par ledit équipage (PN), et placement de ladite zone d'alerte présente sur le dispositif multifonction principal (10) selon ledit deuxième mode d'affichage (M2) suite à ladite sollicitation,
∘ sollicitation d'une commande de réduction (64) de ladite zone d'alerte présente dans le dispositif multifonction principal (10) par ledit équipage (PN) et suite à ladite sollicitation d'une commande de réduction :
▪ placement de ladite zone d'alerte présente dans le dispositif multifonction principal (10) selon le mode masqué (M3),
▪ détermination de la présence d'une dite zone d'alerte selon le deuxième mode d'affichage (M2) sur au moins un desdits dispositifs multifonction secondaires (20, 30), et
▪ si ladite présence n'est pas déterminée, placement d'une dite zone d'alerte sur ledit objet affiché sur ledit au moins un écran d'un desdits dispositifs multifonction secondaires (20, 30) selon ledit deuxième mode d'affichage (M2).

2. Procédé de détection d'un événement imprévu selon la revendication 1,
**caractérisé en ce qu'**une dite zone d'alerte placée dans ledit premier mode d'affichage présente un cadre clignotant (61) entourant ledit au moins un message (62), ledit cadre clignotant (61) n'apparaissant pas dans le deuxième mode d'affichage (M2).

3. Procédé de détection d'un événement imprévu selon l'une quelconque des revendications 1 à 2,
**caractérisé en ce qu'**une dite zone d'alerte placée dans ledit mode masqué présente uniquement un repère (65) qui signale cette zone d'alerte.

4. Procédé de détection d'un événement imprévu selon l'une quelconque des revendications 1 à 3,
**caractérisé en ce que** ladite commande d'acquittement (63) comporte une portion tactile dudit au moins un écran du dispositif multifonction principal, ladite portion tactile étant délimitée par ladite zone d'alerte placée selon ledit premier mode d'affichage (M1) sur ledit dispositif multifonction principal.

5. Procédé de détection d'un événement imprévu selon l'une quelconque des revendications 1 à 4,
**caractérisé en ce que** ladite commande de réduction (64) d'une zone d'alerte comporte un symbole (66) attaché à la zone d'alerte placée selon ledit deuxième mode d'affichage(M2).

6. Procédé de détection d'un événement imprévu selon l'une quelconque des revendications 1 à 5,
**caractérisé en ce que** lorsqu'une dite zone d'alerte est affichée sur ledit au moins un écran d'un dispositif multifonction secondaire (20, 30) selon le deuxième mode d'affichage, ledit procédé comporte les étapes de :
- sollicitation d'une commande de réduction (64) par ledit équipage et suite à ladite sollicitation d'une commande de réduction :
∘ placement selon le mode masqué (M3) de cette zone d'alerte présente dans un dispositif multifonction secondaire selon le deuxième mode d'affichage (M2), et
∘ placement d'une zone d'alerte sur ledit objet affiché sur ledit au moins un écran d'un autre dispositif multifonction secondaire selon ledit deuxième mode d'affichage (M2).

7. Procédé de détection d'un événement imprévu selon l'une quelconque des revendications 1 à 6,
**caractérisé en ce qu'**à chaque instant et au moins dans le deuxième mode d'affichage (M2), une dite zone d'alerte comporte une liste (70) incluant chaque événement imprévu détecté et encore en vigueur.

8. Procédé de détection d'un événement imprévu selon l'une quelconque des revendications 1 à 7,
**caractérisé en ce qu'**en présence de plusieurs événements imprévus, une dite zone d'alerte comporte selon le premier mode d'affichage (M1) uniquement un message relatif au dernier événement imprévu survenu.

9. Procédé de détection d'un événement imprévu selon l'une quelconque des revendications 1 à 8,
**caractérisé en ce que** ledit procédé comporte une étape de transmission d'un état de fonctionnement de chacun desdits dispositifs multifonction secondaires (20, 30) et dispositif multifonction principal (10) les uns aux autres, l'état de fonctionnement d'un desdits dispositifs multifonction secondaires (20, 30) ou dispositif multifonction principal (10) indiquant au moins si une zone d'alerte est affichée par ce dispositif multifonction secondaire (20,30) ou dispositif multifonction principal (10) selon le deuxième mode d'affichage (M2), chacun desdits dispositifs multifonction secondaires (20, 30) et dispositif multifonction principal (10) déterminant s'il doit placer une zone d'alerte sur un dit écran en fonction desdits états de fonctionnement et dudit signal d'alerte..

10. Procédé de détection d'un événement imprévu selon l'une quelconque des revendications 1 à 9,
**caractérisé en ce que** suite à ladite survenue d'un événement imprévu, le procédé comporte les étapes suivantes :
- détection d'une panne dudit dispositif multifonction principal (10) empêchant ledit placement d'une zone d'alerte selon le premier mode d'affichage (M1) sur ledit objet affiché sur ledit au moins un écran dudit dispositif multifonction principal (10),
- placement d'une zone d'alerte selon le premier mode d'affichage (M1) sur ledit objet affiché sur ledit au moins un écran d'un dit dispositif multifonction secondaire prédéterminé.

11. Procédé de détection d'un événement imprévu selon l'une quelconque des revendications 1 à 10,
**caractérisé en ce qu'**une taille de la zone d'alerte varie en fonction du nombre d'événement(s) imprévu(s) en vigueur.

12. Procédé de détection d'un événement imprévu selon l'une quelconque des revendications 1 à 11,
**caractérisé en ce que** lorsqu'une dite zone d'alerte est placée selon le deuxième mode d'affichage (M2) sur un desdits dispositifs multifonction secondaires (20, 30) pour signaler un événement imprévu, lorsqu'un nouvel événement imprévu est détecté, ladite zone alerte est placée dans le premier mode d'affichage (M1).

13. Procédé de détection d'un événement imprévu selon l'une quelconque des revendications 1 à 12,
**caractérisé en ce que** suite à la survenue d'un événement imprévu chacun desdits dispositif multifonction principal (10) et dispositifs multifonction secondaires (20, 30) étant dans une configuration (CONF) donnée dans laquelle une zone d'alerte est présentée dans un des premier mode d'affichage (M1)/ deuxième mode d'affichage (M2)/ mode masqué (M3) ou n'est pas présentée, suite à la survenue d'un nouvel événement imprévu et de ladite sollicitation d'une commande d'acquittement lesdits dispositif multifonction principal (10) et dispositifs multifonction secondaires (20, 30) sont placés dans ladite configuration (CONF) donnée.

14. Procédé de détection d'un événement imprévu selon l'une quelconque des revendications 1 à 13,
**caractérisé en ce que**, ledit équipage (PN) comprenant un copilote (PNF), un dispositif multifonction annexe (40) étant agencé en face dudit copilote (PNF), le dispositif multifonction annexe (40) comprenant au moins un écran (41) et un calculateur de commande (42), suite à la survenue d'un événement imprévu le procédé comporte une étape de placement dans une position prédéterminée et selon le premier mode d'affichage (M1) d'une zone d'alerte sur ledit au moins un écran dudit dispositif multifonction annexe (40).

15. Procédé de détection d'un événement imprévu selon l'une quelconque des revendications 1 à 14,
**caractérisé en ce que** suite à la survenue d'un événement imprévu et en cas d'absence d'une zone d'alerte sur un desdits dispositifs multifonction secondaires (20, 30), une zone d'alerte est placée sur ce dispositif multifonction secondaire selon le mode masqué (M3).

16. Procédé de détection d'un événement imprévu selon l'une quelconque des revendications 1 à 15,
**caractérisé en ce que** chaque zone d'alerte d'un dit dispositif multifonction principal (10) comporte dans ledit mode masqué (M3) une zone tactile d'agrandissement (67), le calculateur de commande (12) d'un dit dispositif multifonction principal (10) et dispositifs multifonction secondaires (20, 30) plaçant ladite zone d'alerte dans le deuxième mode d'affichage (M2) suite à une sollicitation de ladite zone tactile d'agrandissement (67) correspondante.

17. Aéronef (1) embarquant un équipage (PN), ledit équipage (PN) comprenant au moins un pilote (PF), ledit aéronef (1) étant muni d'un calculateur d'alerte (5) apte à détecter la présence d'un dit événement imprévu, ledit aéronef (1) étant muni d'un dispositif multifonction principal (10) agencé en face du pilote (PF) et d'au moins deux dispositifs multifonction secondaires (20, 30) visibles par le pilote (PF), le dispositif multifonction principal (10) et lesdits dispositifs multifonction secondaires (20, 30) comprenant chacun au moins un écran (11, 21, 31) et un calculateur de commande (12, 22, 32), chaque écran (11, 21, 31) affichant un objet,
**caractérisé en ce que** ledit dispositif multifonction principal (10) et lesdits dispositifs multifonction secondaires (20, 30) sont configurés pour appliquer le procédé selon l'une quelconque des revendications 1 à 16.

## Patentansprüche

1. Verfahren zum Erkennen eines unvorhergesehenen Ereignisses innerhalb eines Luftfahrzeugs (1), wobei das Luftfahrzeug (1) eine Besatzung (PN) umfasst, die Besatzung einen Piloten (PF) umfasst, das Luftfahrzeug (1) mit einem Alarmcomputer (5) ausgestattet ist, der eingerichtet ist, das Auftreten des unvorhergesehenen Ereignisses zu erkennen, wobei das Luftfahrzeug (1) mit einer vor dem Piloten (PF) angeordneten Haupt-Multifunktionsvorrichtung (10) und mindestens zwei für den Piloten (PF) sichtbaren Neben-Multifunktionsvorrichtungen (20, 30) versehen ist, wobei die Haupt-Multifunktionsvorrichtung (10) und die Neben-Multifunktionsvorrichtungen (20, 30) jeweils mindestens einen Bildschirm (11, 21, 31) und einen Steuercomputer (12, 22, 32) umfassen und jeder Bildschirm (11, 21, 31) ein Objekt anzeigt,
**dadurch gekennzeichnet, dass** das Verfahren die folgenden Schritte umfasst:
- Erfassen des Auftretens eines unerwarteten Ereignisses mit dem Alarmcomputer (5) und Übertragen eines Alarmsignals, das das unerwartete Ereignis anzeigt, an die Haupt-Multifunktionsvorrichtung (10) und die Neben-Multifunktionsvorrichtungen (20, 30),
- nach dem Eintreten des unvorhergesehenen Ereignisses Platzieren mindestens eines Warnbereichs (60) auf mindestens einer unter Haupt-Multifunktionsvorrichtung (10) und Neben-Multifunktionsvorrichtungen (20, 30), solange das unvorhergesehene Ereignis andauert, durch Ausführen der folgenden Schritte, wobei jeder Warnbereich (60) in einen ersten Anzeigemodus (M1) oder einen zweiten Anzeigemodus (M2), in dem der Warnbereich (60) mindestens eine für den Piloten (PF) sichtbare Nachricht (62) aufweist, die das unerwartete Ereignis signalisiert, oder in einem versteckten Modus (M3) versetzbar ist, in dem die mindestens eine Nachricht (62) nicht sichtbar ist:
• Versetzen eines Warnbereichs auf dem auf dem mindestens einen Bildschirm (11) der Haupt-Multifunktionsvorrichtung (10) angezeigten Objekt in den ersten Anzeigemodus (M1),
• Betätigen einer Bestätigungssteuerung (63) durch die Besatzung (PN) und, nach dem Betätigen, Versetzen des auf der Haupt-Multifunktionsvorrichtung (10) vorhandenen Warnbereichs in den zweiten Anzeigemodus (M2),
• Betätigen einer Verkleinerungssteuerung (64) des auf der Haupt-Multifunktionsvorrichtung (10) vorhandenen Warnbereichs durch die Besatzung (PN) und, nach dem Betätigen einer Verkleinerungssteuerung:
∘ Versetzen des auf der Haupt-Multifunktionsvorrichtung (10) vorhandenen Warnbereichs in den versteckten Modus (M3),
∘ Erfassen des Vorliegens eines Warnbereichs im zweiten Anzeigemodus (M2) auf mindestens einer der Neben-Multifunktionsvorrichtungen (20, 30), und
∘ wenn das Vorliegen nicht erfasst wird, Versetzen eines der Warnbereiche auf dem auf dem mindestens einen Bildschirm einer der Neben-Multifunktionsvorrichtungen (20, 30) angezeigten Objekt in den zweiten Anzeigemodus (M2).

2. Verfahren zum Erfassen eines unerwarteten Ereignisses nach Anspruch 1,
**dadurch gekennzeichnet, dass** ein in den ersten Anzeigemodus versetzter Warnbereich einen blinkenden Rahmen (61) aufweist, der die mindestens eine Nachricht (62) umgibt, wobei der blinkende Rahmen (61) nicht in dem zweiten Anzeigemodus (M2) erscheint.

3. Verfahren zum Erfassen eines unerwarteten Ereignisses nach einem der Ansprüche 1 bis 2,
**dadurch gekennzeichnet, dass** ein in den maskierten Modus versetzter Warnbereich nur eine Markierung (65) anzeigt, die diesen Warnbereich signalisiert.

4. Verfahren zum Erfassen eines unerwarteten Ereignisses nach einem der Ansprüche 1 bis 3,
**dadurch gekennzeichnet, dass** die Bestätigungssteuerung (63) einen Berührungsbereich des mindestens einen Bildschirms der Haupt-Multifunktionsvorrichtung umfasst, wobei der Berührungsbereich durch den im ersten Anzeigemodus (M1) auf der Haupt-Multifunktionsvorrichtung angeordneten Warnbereich begrenzt wird.

5. Verfahren zum Erfassen eines unerwarteten Ereignisses nach einem der Ansprüche 1 bis 4,
**dadurch gekennzeichnet, dass** die Verkleinerungssteuerung (64) eines Warnbereichs ein Symbol (66) umfasst, das an dem in den zweiten Anzeigemodus (M2) versetzten Warnbereich angebracht ist.

6. Verfahren zum Erfassen eines unerwarteten Ereignisses nach einem der Ansprüche 1 bis 5,
**dadurch gekennzeichnet, dass**, wenn im zweiten Anzeigemodus ein Warnbereich auf dem mindestens einen Bildschirm einer Neben-Multifunktionsvorrichtung (20, 30) angezeigt wird, das Verfahren die folgenden Schritte umfasst:
- Betätigen einer Verkleinerungssteuerung (64) durch die Besatzung und, nach dem Betätigen einer Verkleinerungssteuerung:
- Versetzen des Warnbereichs, der sich auf einer Neben-Multifunktionsvorrichtung im zweiten Anzeigemodus (M2) befindet, in den versteckten Modus (M3), und
- Versetzen eines Warnbereichs auf dem Objekt, das auf dem mindestens einen Bildschirm einer anderen Neben-Multifunktionsvorrichtung angezeigt wird, in den zweiten Anzeigemodus (M2).

7. Verfahren zum Erfassen eines unvorhergesehenen Ereignisses nach einem der Ansprüche 1 bis 6,
**dadurch gekennzeichnet, dass** zu jeder Zeit und zumindest in dem zweiten Anzeigemodus (M2) ein Warnbereich eine Liste (70) umfasst, die jedes unerwartete Ereignis enthält, das erfasst wurde und noch in Kraft ist.

8. Verfahren zum Erfassen eines unerwarteten Ereignisses nach einem der Ansprüche 1 bis 7,
**dadurch gekennzeichnet, dass** bei Vorliegen mehrerer unvorhergesehener Ereignisse ein Warnbereich im ersten Anzeigemodus (M1) nur eine Meldung bezüglich des zuletzt eingetretenen unvorhergesehenen Ereignisses enthält.

9. Verfahren zum Erfassen eines unerwarteten Ereignisses nach einem der Ansprüche 1 bis 8,
**dadurch gekennzeichnet, dass** das Verfahren einen Schritt des Übertragens eines Betriebszustands jeder der Neben-Multifunktionsvorrichtungen (20, 30) und der Haupt-Multifunktionsvorrichtung (10) untereinander umfasst, wobei der Betriebszustand einer der Neben-Multifunktionsvorrichtungen (20, 30) oder der Haupt-Multifunktionsvorrichtung (10) mindestens anzeigt, ob ein Warnbereich von der Neben-Multifunktionsvorrichtung (20, 30) oder der Haupt-Multifunktionsvorrichtung (10) im zweiten Anzeigemodus (M2) angezeigt wird, wobei unter den Neben-Multifunktionsvorrichtungen (20, 30) und der Haupt-Multifunktionsvorrichtung (10) eine jede in Abhängigkeit von den Betriebszuständen und dem Warnsignal bestimmt, ob ein Warnbereich auf einem der Bildschirme platziert werden soll.

10. Verfahren zum Erfassen eines unerwarteten Ereignisses nach einem der Ansprüche 1 bis 9,
**dadurch gekennzeichnet, dass** das Verfahren nach dem Auftreten eines unvorhergesehenen Ereignisses die folgenden Schritte umfasst:
- Erfassen eines Fehlers der Haupt-Multifunktionsvorrichtung (10), der das Platzieren eines Warnbereichs im ersten Anzeigemodus (M1) auf dem auf dem mindestens einen Bildschirm der Haupt-Multifunktionsvorrichtung (10) angezeigten Objekt verhindert,
- Platzieren eines Warnbereichs im ersten Anzeigemodus (M1) auf dem auf dem mindestens einen Bildschirm der vorgegebenen Neben-Multifunktionsvorrichtung angezeigten Objekt.

11. Verfahren zum Erfassen eines unerwarteten Ereignisses nach einem der Ansprüche 1 bis 10,
**dadurch gekennzeichnet, dass** eine Größe des Warnbereichs entsprechend der Anzahl der in Kraft befindlichen unvorhergesehenen Ereignisse variiert.

12. Verfahren zum Erfassen eines unerwarteten Ereignisses nach einem der Ansprüche 1 bis 11,
**dadurch gekennzeichnet, dass**, wenn ein Warnbereich auf einer der Neben-Multifunktionsvorrichtungen (20, 30) in den zweiten Anzeigemodus (M2) versetzt wird, um ein unerwartetes Ereignis zu signalisieren, dieser Warnbereich bei Erfassung eines neuen unerwarteten Ereignisses in den ersten Anzeigemodus (M1) versetzt wird.

13. Verfahren zum Erfassen eines unerwarteten Ereignisses nach einem der Ansprüche 1 bis 12,
**dadurch gekennzeichnet, dass** wenn sich nach dem Auftreten eines unvorhergesehenen Ereignisses von der Haupt-Multifunktionsvorrichtung (10) und den Neben-Multifunktionsvorrichtungen (20, 30) eine jede in einer gegebenen Konfiguration (CONF) befindet, in der ein Warnbereich in einem erstem Anzeigemodus (M1) / zweiten Anzeigemodus (M2) / versteckten Modus (M3) angezeigt oder nicht angezeigt wird, nach dem Auftreten eines neuen unvorhergesehenen Ereignisses und der Betätigung einer Bestätigungssteuerung die Haupt-Multifunktionsvorrichtung (10) und die Neben-Multifunktionsvorrichtungen (20, 30) in die gegebene Konfiguration (CONF) versetzt werden.

14. Verfahren zum Erfassen eines unerwarteten Ereignisses nach einem der Ansprüche 1 bis 13,
**dadurch gekennzeichnet, dass** die Besatzung (PN) einen Co-Piloten (PNF) umfasst, dass eine Hilfs-Multifunktionsvorrichtung (40) gegenüber dem Co-Piloten (PNF) angeordnet ist, wobei die Hilfs-Multifunktionsvorrichtung (40) mindestens einen Bildschirm (41) und einen Steuercomputer (42) umfasst, wobei das Verfahren nach dem Auftreten eines unvorhergesehenen Ereignisses einen Schritt des Platzierens eines Warnbereichs an einer vorgegebenen Position und seines Versetzens in den ersten Anzeigemodus (M1) auf dem mindestens einen Bildschirm der Hilfs-Multifunktionsvorrichtung (40) umfasst.

15. Verfahren zum Erfassen eines unerwarteten Ereignisses nach einem der Ansprüche 1 bis 14,
**dadurch gekennzeichnet, dass** nach dem Auftreten eines unvorhergesehenen Ereignisses und in Abwesenheit eines Warnbereichs auf einer der Neben-Multifunktionsvorrichtungen (20, 30) ein Warnbereich im maskierten Modus (M3) auf dieser Neben-Multifunktionsvorrichtung angeordnet wird.

16. Verfahren zum Erfassen eines unerwarteten Ereignisses nach einem der Ansprüche 1 bis 15,
**dadurch gekennzeichnet, dass** jeder Warnbereich einer sogenannten Haupt-Multifunktionsvorrichtung (10) in dem maskierten Modus (M3) einen Vergrößerungs-Berührungsbereich (67) aufweist, wobei der Steuercomputer (12) einer solchen Haupt-Multifunktionsvorrichtung (10) und Neben-Multifunktionsvorrichtungen (20, 30) den Warnbereich nach einer Betätigung des entsprechenden Vergrößerungs-Berührungsbereichs (67) in den zweiten Anzeigemodus (M2) schalten.

17. Luftfahrzeug (1), das eine Besatzung (PN) trägt, wobei die Besatzung (PN) mindestens einen Piloten (PF) umfasst, wobei das Luftfahrzeug (1) mit einem Warnrechner (5) ausgestattet ist, der eingerichtet ist, das Auftreten des unvorhergesehenen Ereignisses zu erfassen, wobei das Luftfahrzeug (1) mit einer dem Piloten (PF) gegenüberliegenden Haupt-Multifunktionsvorrichtung (10) und mindestens zwei Neben-Multifunktionseinrichtungen (20, 30) ausgestattet ist, die für den Piloten (PF) sichtbar sind, wobei die Haupt-Multifunktionsvorrichtung (10) und die Neben-Multifunktionsvorrichtungen (20, 30) jeweils mindestens eine Anzeige (11, 21, 31) und einen Steuercomputer (12, 22, 32) umfassen, wobei jede Anzeige (11, 21, 31) ein Objekt anzeigt,
**dadurch gekennzeichnet, dass** die Haupt-Multifunktionsvorrichtung (10) und die Neben-Multifunktionsvorrichtungen (20, 30) konfiguriert sind, um das Verfahren nach einem der Ansprüche 1 bis 16 anzuwenden.

## Claims

1. Method for detecting an unforeseen event within an aircraft (1), said aircraft (1) including a crew (PN), said crew including a pilot (PF), said aircraft (1) being equipped with an alert computer (5) capable of detecting the presence of one such unforeseen event, said aircraft (1) being equipped with a main multifunction device (10) arranged so as to face the pilot (PF) and at least two secondary multifunction devices (20, 30) that can be seen by the pilot (PF), the main multifunction device (10) and said secondary multifunction devices (20, 30) each including at least one screen (11, 21, 31) and a control computer (12, 22, 32), each screen (11, 21, 31) displaying an object,
**characterised in that** said method comprises the following steps:
- detecting the occurrence of an unforeseen event using said alert computer (5), and transmitting an alert signal indicating said unforeseen event to said main multifunction device (10) and said secondary multifunction devices (20, 30),
- following said occurrence of one such unforeseen event, placing at least one alert area (60) on at least one of said main multifunction device (10) and secondary multifunction devices (20, 30) as long as said unforeseen event persists by carrying out the following steps, it being possible to place each alert area (60) in a first display mode (M1) or a second display mode (M2), in which the alert area (60) comprises at least one message (62) that can be seen by the pilot (PF) and indicates said unforeseen event, or in a hidden mode (M3), in which said at least one message (62) cannot be seen:
∘ placing, in the first display mode (M1), an alert area over said displayed object on said at least one screen (11) of said main multifunction device (10),
∘ said crew (PN) requesting an acknowledgement control (63), and placing said alert area provided on the main multifunction device (10) in said second display mode (M2) following said request,
∘ said crew (PN) requesting a reduction control (64) of said alert area provided in the main multifunction device (10) and, following said request for a reduction control:
▪ placing said alert area provided in the main multifunction device (10) in the hidden mode (M3),
▪ determining the presence of one such alert area in the second display mode (M2) on at least one of said secondary multifunction devices (20, 30), and
▪ if said presence is not determined, placing one such alert area over said displayed object on said at least one screen of one of said secondary multifunction devices (20, 30) in said second display mode (M2).

2. Method for detecting an unforeseen event according to claim 1,
**characterised in that** one such alert area placed in said first display mode has a flashing border (61) surrounding said at least one message (62), said flashing border (61) not appearing in the second display mode (M2).

3. Method for detecting an unforeseen event according to either claim 1 or claim 2,
**characterised in that** one such alert area placed in said hidden mode has only one position mark (65) which indicates said alert area.

4. Method for detecting an unforeseen event according to any of claims 1 to 3,
**characterised in that** said acknowledgement control (63) comprises a touch-sensitive portion of said at least one screen of the main multifunction device, said touch-sensitive portion being delimited by said alert area placed in said first display mode (M1) on said main multifunction device.

5. Method for detecting an unforeseen event according to any of claims 1 to 4,
**characterised in that** said reduction control (64) of an alert area comprises a symbol (66) attached to the alert area placed in said second display mode (M2).

6. Method for detecting an unforeseen event according to any of claims 1 to 5, **characterised in that**, when one such alert area is displayed on said at least one screen of a secondary multifunction device (20, 30) in the second display mode, said method comprises the steps of:
- said crew requesting a reduction control (64) and, following said request for a reduction control:
∘ placing said alert area provided in a secondary multifunction device in the second display mode (M2) in the hidden mode (M3), and
∘ placing an alert area over said displayed object on said at least one screen of another secondary multifunction device in said second display mode (M2).

7. Method for detecting an unforeseen event according to any of claims 1 to 6, **characterised in that**, at any moment and at least in the second display mode (M2), one such alert area comprises a list (70) including each unforeseen event detected and still in effect.

8. Method for detecting an unforeseen event according to any of claims 1 to 7, **characterised in that**, in the presence of a plurality of unforeseen events, one such alert area comprises, in the first display mode (M1), only one message relating to the last unforeseen event that took place.

9. Method for detecting an unforeseen event according to any of claims 1 to 8, **characterised in that** said method comprises a step of transmitting an operational state of each of said secondary multifunction devices (20, 30) and main multifunction device (10) to one another, the operational state of one of said secondary multifunction devices (20, 30) or main multifunction device (10) indicating at least whether an alert area is displayed by said secondary multifunction device (20, 30) or main multifunction device (10) in the second display mode (M2), each of said secondary multifunction devices (20, 30) and main multifunction device (10) determining if it should place an alert area on one such screen based on said operational states and on said alert signal.

10. Method for detecting an unforeseen event according to any of claims 1 to 9, **characterised in that**, following said occurrence of an unforeseen event, the method comprises the following steps:
- detecting a failure of said main multifunction device (10) preventing said placement of an alert area in the first display mode (M1) over said displayed object on said at least one screen of said main multifunction device (10),
- placing an alert area in the first display mode (M1) over said displayed object on said at least one screen of one such predetermined secondary multifunction device.

11. Method for detecting an unforeseen event according to any of claims 1 to 10, **characterised in that** a size of the alert area varies depending on the number of unforeseen events in effect.

12. Method for detecting an unforeseen event according to any of claims 1 to 11, **characterised in that**, when one such alert area is placed in the second display mode (M2) on one of said secondary multifunctional devices (20, 30) to indicate an unforeseen event, when a new unforeseen event is detected, said alert area is placed in the first display mode (M1).

13. Method for detecting an unforeseen event according to any of claims 1 to 12, **characterised in that**, following the occurrence of an unforeseen event, each of said main multifunction device (10) and secondary multifunction devices (20, 30) being in a given configuration (CONF) in which an alert area is provided in one of the first display mode (M1) / second display mode (M2) / hidden mode (M3), or is not provided, following the occurrence of a new unforeseen event and of said request for an acknowledgement control, said main multifunction device (10) and secondary multifunction devices (20, 30) are placed in said given configuration (CONF).

14. Method for detecting an unforeseen event according to any of claims 1 to 13, **characterised in that**, said crew (PN) including a co-pilot (PNF), an additional multifunction device (40) being arranged so as to face said co-pilot (PNF), the additional multifunction device (40) including at least one screen (41) and a control computer (42), following the occurrence of an unforeseen event, the method comprises a step of placing, in a predetermined position and in the first display mode (M1), an alert area on said at least one screen of said additional multifunction device (40).

15. Method for detecting an unforeseen event according to any of claims 1 to 14, **characterised in that**, following the occurrence of an unforeseen event and if there is no alert area on one of said secondary multifunction devices (20, 30), an alert area is placed on said secondary multifunction device in the hidden mode (M3).

16. Method for detecting an unforeseen event according to any of claims 1 to 15, **characterised in that** each alert area of one such main multifunction device (10) comprises, in said hidden mode (M3), a touch-sensitive enlargement area (67), the control computer (12) of one such main multifunction device (10) and secondary multifunction devices (20, 30) placing said alert area in the second display mode (M2) following a request of said corresponding touch-sensitive enlargement area (67).

17. Aircraft (1) having a crew (PN) on board, said crew (PN) including at least one pilot (PF), said aircraft (1) being equipped with an alert computer (5) capable of detecting the presence of one such unforeseen event, said aircraft (1) being equipped with a main multifunction device (10) arranged so as to face the pilot (PF) and at least two secondary multifunction devices (20, 30) that can be seen by the pilot (PF), the main multifunction device (10) and said secondary multifunction devices (20, 30) each including at least one screen (11, 21, 31) and a control computer (12, 22, 32), each screen (11, 21, 31) displaying an object,
**characterised in that** said main multifunction device (10) and said secondary multifunction devices (20, 30) are configured to carry out the method according to any of claims 1 to 16.
